# EUROPEAN PATENT APPLICATION

(11) **EP 4 752 736 A1**
(43) Date of publication of application: **03.06.2026**
(21) Application number: 25214036.3
(22) Date of filing: 06.11.2025
(51) Int. Cl.: G06F 12/0842, G06F 12/0862, G06F 12/0886, G06F 12/0855

(54) **MEMORY CONTROLLER PERFORMING A PRIORITY BASED DATA PREFETCH AND ASSOCIATED METHODS AND SYSTEMS**

(30) Priority: 28.11.2024 IN 202441093387
(71) Applicant: NXP B.V., 5656 AG Eindhoven (NL)
(72) Inventor: Singh, Vivek, 5656AG Eindhoven (NL); Tiwari, Nikhil, 5656AG Eindhoven (NL); Karuppaiah, Pradap, 5656AG Eindhoven (NL); Kharbanda, Nipun, 5656AG Eindhoven (NL)
(74) Representative: Miles, John Richard

(57) **Abstract**

A priority based prefetch by a memory controller is disclosed. A prefetch of data of a low priority master is suspended when a data request associated with a high priority master indicated by a master identification is to be performed. The suspension includes storing a saved state of the prefetch, performing the prefetch of data of the high priority master, and resuming the prefetch of data of the low priority master when the prefetch of data of the high priority master is completed.

## Description

### FIELD OF USE

The present disclosure relates generally to a memory controller and more particularly, to a priority based data prefetch performed by the memory controller and associated methods and systems.

### BACKGROUND

A system on a chip (SoC) has a plurality of masters which access data stored in a memory and a memory controller to facilitate this access. The memory controller receives from a master a data request to read data from the memory which is external to the memory controller based on an address in the data request. A buffer of the memory controller could already store the data requested in which case the memory does not need to be accessed and the requested data is provided to the master. If the data is not stored in the buffer, then the memory controller prefetches data from the memory with a higher latency compared to access to the buffer. The prefetched data includes the data requested which is then provided to the master and data that the master could request at some later time. The memory controller stores the prefetched data in the buffer avoiding a need to obtain the same data from the memory when the master later requests the data and reducing latency of access. The memory remains busy while the prefetch is being performed. Any data request from another master needs to wait until the prefetch is completed.

### BRIEF DESCRIPTION OF THE DRAWINGS

The following detailed description of the preferred embodiments of the present disclosure will be better understood when read in conjunction with the appended drawings. The present disclosure is illustrated by way of example, and not limited by the accompanying figures, in which like references indicate similar elements.
FIG. 1 is an example block diagram of a system on a chip (SoC) arranged to perform a priority based prefetch in accordance with one or more embodiments
FIG. 2 illustrates example functions performed by a memory controller in accordance with one or more embodiments.
FIG. 3 is an example flowchart of functions performed by a memory control circuit in accordance with one or more embodiments.
FIG. 4 is an example flowchart of functions performed by a memory interface circuit in accordance with one or more embodiments.

### DETAILED DESCRIPTION

The detailed description of the appended drawings is intended as a description of the various embodiments of the present disclosure, and is not intended to represent the only form in which the present disclosure may be practiced. It is to be understood that the same or equivalent functions may be accomplished by different embodiments that are intended to be encompassed within the spirit and scope of the present disclosure.

One or more embodiments disclosed herein are directed to avoiding latency in performing a data request received from a high priority master indicated by a master identification in the data request when a memory controller is performing a prefetch of a low priority master. Instead of the high priority master having to wait for the prefetch of data of the low priority master to complete, the prefetch of data of the low priority master is suspended and the data request of the high priority master is performed. The prefetch of data of the low priority master is suspended by the memory controller after a chunk of data is read and any tag data associated with decryption or error correction coding (ECC) of the data is also read and which could result in the read operation crossing a page boundary of the memory after the determination to suspend and before the prefetch is suspended when the chunk includes the tag data. Additionally, a resume address in the memory where the prefetch is to be resumed and an amount of data left to prefetch is also determined. This resume address and amount of data is stored as a saved suspension state in the memory controller. After the data request of the high priority master is completed which could also include a prefetch, the prefetch of data of the low priority master is then resumed based on the saved suspension state. In some embodiments, the resumed prefetch could be suspended again depending on a prefetch of another high priority master being performed. The suspension and resumption is performed by the memory controller and without intervention by higher layer software of the master. Well known instructions, protocols, structures, and techniques have not been shown in detail in order not to obfuscate the description.

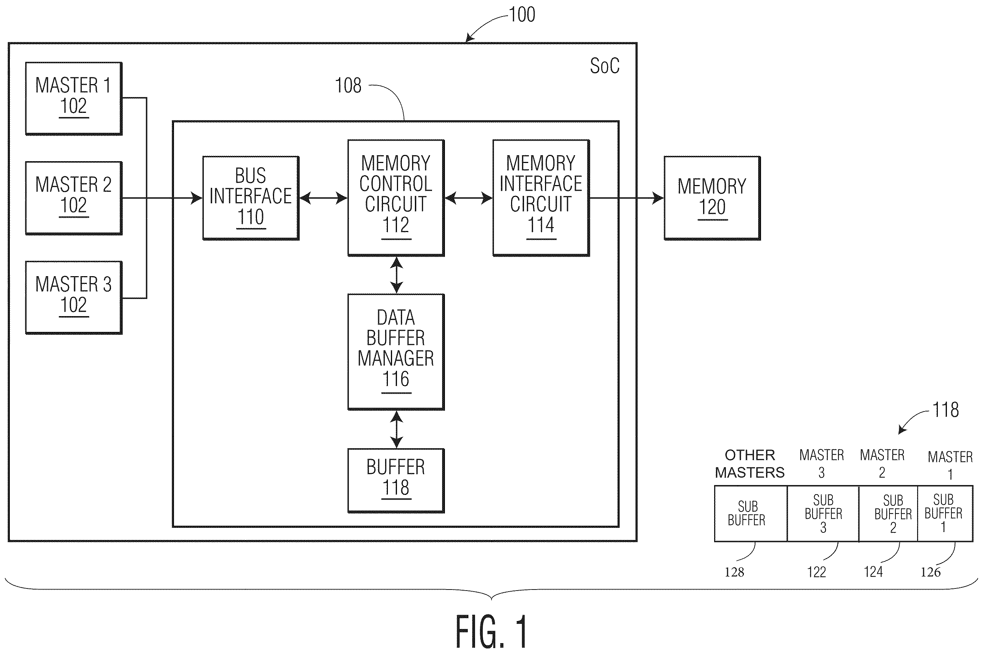

FIG. 1 is an example block diagram of a system on a chip (SoC) 100 arranged to perform a priority based prefetch of data in accordance with one or more embodiments. The SoC 100 includes a plurality of masters, a memory controller 108, and a memory 120. The SoC 100 is shown to have three masters 102 shown as master 1, master 2, and master 3, but the SoC 100 may have fewer or more masters in other embodiments. Each master 102 may be a controller for performing a memory access including read and write operations on behalf of a processor (not shown). The master 102 may be a direct memory access (DMA) controller, a display controller, a central processing unit (CPU) core, or a processor as illustrative examples. The memory controller 108 may facilitate access to the memory 120 by the master 102 and the memory 120 may be a non-volatile memory such as a flash memory or volatile memory such as a random access memory (RAM) which is external to the memory control circuit 112. Components of the SoC 100 as described herein may be implemented with circuitry such as one or more of analog circuitry, mix signal circuitry, memory circuitry, logic circuitry, or processing circuitry that executes code stored in a memory that when executed by the processing circuitry performs the disclosed functions.

The memory controller 108 includes a bus interface 110, a memory control circuit 112, a memory interface circuit 114, a data buffer manager 116, and a buffer 118 in one or more embodiments. The bus interface 110 may facilitate communication between the master 102 and the memory control circuit 112. The bus interface 110 may take different forms including an advanced extensible interface (AXI) or advanced high performance bus (AHB) interface. The master 102 may generate a data request to access data stored in the memory 120 which is received by the bus interface 110 and provided to the memory control circuit 112. The data request may include a master identification (master ID) which identifies which master 102 generated the access request and an indication of the data that is requested. For example, the indication may be an address of the data requested which is stored in the memory 120 or a start address of the data requested and an amount of data stored in the memory 120 that is requested starting at the start address. Before accessing the memory 120, the memory control circuit 112 may provide the address and an indication of the master identification to the data buffer manager 116 which checks whether the buffer 118 stores the requested data. The data may be already stored in the buffer 118 associated with an indication of the address, avoiding a need to access the memory 120 which has a higher latency for access. The buffer 118 may be partitioned into one or more sub-buffers which correspond to the different masters. For example, the buffer 118 may be divided into four sub-buffers 122-128. Each sub-buffer 122-128 may be assigned to a respective master and store data corresponding to that master that was previously fetched from the memory. For example, sub-buffer 122 may be assigned to master 3, sub-buffer 124 may be assigned to master 2, and sub-buffer 126 may be assigned to master 1. Further, sub-buffer 128 may be assigned to any remaining masters other than masters 1-3. The data buffer manager 116 may access respective sub-buffer 122-128 based on a master identification of the master 102 issuing the data request which is received from the memory control circuit 112 to determine if the data requested is stored in the buffer 118. If the data is stored in the buffer 118, then the buffer manager 116 returns the data to the memory control circuit 112 which then provides the requested data to the master 102.

Prefetching is a process of accessing a region of the memory 120, reading a predetermined amount of data in the memory 120, and providing the read data to the memory control circuit 112. The memory control circuit 112 then stores the read data in the buffer 118 in anticipation that the master 102 may request the data at a later time and provides the data requested to the master 102 from the buffer 118 without having to access the memory 120 to obtain the data requested when the data request is received. The prefetch reduces a latency for access to the data of the data request by the master 102 at some later time because the memory 120 which is external to the SoC 100 does not need to be accessed if the data request is later received from the master 102 for data that is already stored in the buffer 118. If the data associated with the data request is not in the buffer 118, then the memory control circuit 112 may perform the prefetch. The memory control circuit 112 may cause the memory interface circuit 114 to issue a read request to the memory 120. The read request may indicate a start address of the prefetch and an amount of data to read as a prefetch to the memory interface circuit 114 starting at the start address. The amount of data to prefetch may be programmable in one or more embodiments. The memory 120 may provide the read data which is received by the memory interface circuit 114 and the memory interface circuit 114 may provide the read data to the memory control circuit 112. While the memory interface circuit 114 enables a chip select signal to the memory 120, the memory 120 provides data read which is received by the memory control circuit 112. The memory control circuit 112 provides the read data to the buffer manager 116 for storage in the sub-buffer assigned to the master 102 by the memory control circuit 112. The buffer manager 116 may also assign to the data read the address in the memory 120 where the data was read to facilitate access of the data when the master 102 later sends a data request to access the data at the address. The memory interface circuit 114 may monitor an amount of data read. When the amount of data read reaches the amount of data in the memory 120 to read, then the prefetch of data is aborted. The memory interface circuit 114 may de-assert the chip select to the memory 120 to abort the prefetch of data. Additionally, the memory control circuit 120 may provide the data requested back to the master 102.

In some embodiments, one master 102 may send a data request to the memory control circuit 112 to access data and another master 102 may also send a data request to access data. The bus interface 110 may receive these data requests and provide the respective address of the data requested to the memory control circuit 112. If a prefetch for the one master is ongoing when the data request of the other master 102 is received, a prefetch of the other master will not begin until the pending prefetch is completed. Each master 102 may be associated with a priority. One master may be a high priority master and other master may be a low priority master. For example, the low priority master may be a DMA controller which issues data requests associated with a non-time sensitive operation while the high priority master may be a display controller which issues data requests associated with a time sensitive operation later in time. The data request may have an indication of the master identification which the memory control circuit 112 may use to determine whether the master 102 is a high priority master or a low priority master. In one or more embodiments, the memory control circuit 112 may be configured with a table which indicates whether a master ID is associated with a high priority master or low priority master. Alternatively, the data request may have a priority indication or code that indicates the priority of the master 102. In one or more embodiments, the memory control circuit 112 may be configured with a table which indicates whether the priority indication makes the master 102 a high priority master or low priority master. If a prefetch of a low priority master is ongoing, then a data request and prefetch of a high priority master will conventionally need to wait until a prefetch from the low priority master is completed. This results in a latency of any subsequent data requests by the high priority master.

One or more embodiments disclosed herein are directed to avoiding a latency to a high priority master when the memory control circuit 112 is already performing a prefetch of a low priority master. Instead of the high priority master having to wait for the prefetch from the low priority master to complete, the memory control circuit 112 suspends the prefetch of data of the low priority master and the prefetch of data of the high priority master may be performed. The memory control circuit 112 sends a suspend request to the memory interface circuit 114. If the amount of data associated with the prefetch of data of the low priority master that is ongoing is read, then the prefetch of data of the low priority master is done. The memory interface circuit 114 may de-assert the chip select to the memory 120 when the prefetch is completed and an indication that no data is left to prefetch is provided back to the memory control circuit 112. If the prefetch of data of the low priority master is not completed, then the prefetch of data of the low priority master is suspended by the memory interface circuit 114. A resume address where the prefetch is to resume after being suspended is determined and an amount of data left to prefetch is provided to the memory control circuit 112. The memory control circuit 112 may also provide an indication to the bus interface 110 that the data request of the master 102 is suspended so that the bus interface 110 may inform the low priority master. The prefetch of data of the high priority master is then performed. After the prefetch of data of the high priority master is completed, the memory control circuit 112 resumes the suspended prefetch at the resume address to read the amount of data left to prefetch. The resumed prefetch could be suspended again by the memory control circuit 112 depending on presence of a prefetch of a high priority master to reduce latency to service the prefetch of data of the high priority master. The suspension and resumption is handled by the memory control circuit 112 without intervention (either in software or hardware) by the master 102. The master 102 does not need to perform any suspension or resumption of the prefetch request to the memory 120 itself.

In some embodiments, the data prefetched by the master 102 may be stored in the memory 120 in an encrypted form or be protected by an error correction code (ECC). Tag data may be included with the data which is used to decrypt or perform ECC of the data. The tag data may be one to four bytes of additional data in one or more embodiments. The encryption or ECC may be transparent to the master 102 and any application running on the master 102. The memory control circuit 112 may send a read request with an address to identify the data to be read. The data request may request data in a page of memory. A page be a grouping of a certain number of memory locations in the memory 120 and the memory 120 may have a plurality of pages separated by respective upper and lower page boundaries. The page may be a certain size, e.g., 256 bytes, and the memory 120 may be read at a granular level of no less than the page. The address of the data request generated by the application may not map directly to an address in the memory 120 where the data is located because of the encryption or ECC. When the memory control circuit 112 receives the data request from the master 102, the memory control circuit 112 translates the address in the data request to an address of the memory 120 which is to be read to account for the tag data being stored with the data and performs the data request based on the translated address in the memory 120. The address of the memory 120 may be a physical address of a location in the memory 120 where the data is actually stored which is distinguishable from the address in the data request from the master 102 which is an application address used by an application indicative of where the data is stored in the memory 120 and which may not directly map to the physical address because of the tag data also stored with the requested data in the memory 120. The memory control circuit 112 may translate the application address to the physical address to read the data which includes the tag data from the memory 120 and may decrypt the encrypted data or perform error correction based on the tag data before the decrypted data or ECC corrected data is stored in the buffer 118 along with the application address. To decode data, one or more chunks of data need to be read which are a multiple of 8 bytes, 32 bytes, or 40 bytes of data. A chunk is a minimum size of data the memory control circuit 112 may be able to process at a time. In one or more embodiments, a chunk may include data and tag data to enable the memory control circuit 112 to perform error correction or decrypt the data read or the chunk may include only data when the memory circuit 112 does not need to decrypt or perform error correction of the data. If the data does not have corresponding tag data, then a memory page has a size of a multiple of chunks while if the data has corresponding tag data, then a chunk may cross a page boundary. For example, a chunk may be 32 bytes when no tag data is included and 40 bytes when tag data is included. If a page size is 256 bytes, a chunk may be stored within a page when no tag data is included and in multiple pages when the chunk includes the tag data. The storage size of the chunk, how the data is stored in the memory, and whether any tag data is associated with the data requested may be abstracted or hidden from the application of the master 102 which generates the data request. The data request from the master 102 may need to only indicate the data requested and the memory control circuit 112 accesses the data from the memory 120 in a manner dependent on whether tag data is so associated.

In one or more embodiments, a prefetch may not be suspended until a multiple of a chunk is read. The prefetch may be suspended at a page boundary in the memory 120 when the data has no tag data while prefetch of the chunk may be suspended not at the page boundary in the memory 120 but may need to cross a page boundary to complete reading a chunk having tag data before the prefetch is suspended and after a determination to suspend. The suspension of the prefetch requires determining an amount of data left to prefetch and a resume address of the prefetch. The amount of data left to prefetch after being suspended may include the size of one or more tag data which needs to be read to perform the decoding or decryption. The resume address of the prefetch after being suspended may account for the size of tag data associated with data which is already read and which may affect the location where the remaining data to be read is located in the memory 120. The memory control circuit 112 stores an indication of amount of data left to prefetch and a resume address of the prefetch which accounts for the size of the stored tag data as a stored prefetch state which is then used to resume the prefetch at some later time.

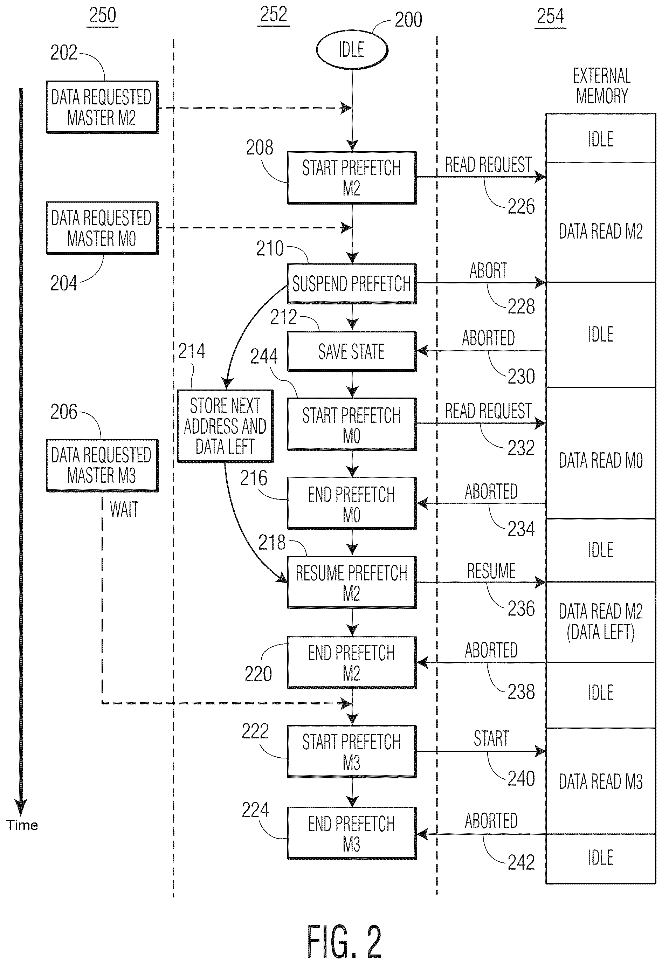

FIG. 2 illustrates example functions 200-254 performed by the memory controller 108 in accordance with one or more embodiments. The memory controller 108 may receive a data request from a master 102 and perform various processing based on the data request. The processing includes determining whether to start, suspend, or resume a prefetch to the memory 120 based on the priority of the master 102 associated with the data request and issuing a read request to the memory 120 to perform the prefetch when the data requested is not stored in the buffer 118. Activity by a master 102 is illustrated on a left side 250, functions performed by the memory controller 108 in response to the data requests are illustrated in a middle 252, and activities by the memory controller 108 with the memory 120 are illustrated at the right side 254. Time may be shown in a vertical direction to illustrate timing of the various operations with respect to each other.

The memory controller 108 may be initially at an idle state at 200 where no data requests are received from any masters and no functions associated with prefetch are ongoing. A master M2 may send a data request at 202 which is received by the memory controller 108. If the data requested is not stored in the buffer 118, then the memory controller 108 may perform a prefetch at 208. The memory interface circuit 114 may send a read request 226 to the memory 120 to read data associated with the prefetch at 208.

The prefetch at 208 may take a period of time to execute. A master M0 may send a data request at 204 to the memory controller 108 while the prefetch at 208 from master M2 is ongoing. The master M0 may have a high priority compared to the master M2. The memory controller 108 may perform a suspend at 210 of the prefetch started at 208 since master M0 has a high priority. The prefetch started at 208 in one or more embodiments may be suspended after one or more chunks have been read from the memory 120 associated with the prefetch request. If the chunks include tag data then the read may cross a page boundary after a determination to suspend but before the prefetch request is actually suspended to complete read of a chunk. If the chunks does not include tag data then the read may be suspended at a page boundary. In one or more embodiments, the memory controller 108 may store an indication of whether the data stored at an address in the memory 120 has associated tag data.

To suspend the prefetch started at 208, the memory controller 108 may send an abort signal 228 to the memory 120 which in some embodiments is to de-assert a chip select signal previously asserted to the memory 120 to abort the prefetch started at 208. An aborted signal 230 may be received from the memory 120. Further, the memory controller 108 may save a state of the prefetch at 212 based on receipt of the aborted signal 230. The memory controller 108 may determine a resume address in the memory where the prefetch started at 208 is to begin when resumed after being suspended. Additionally, an amount of data left to be read from the memory 120 and stored in the buffer 118 to complete the prefetch started at 208 is also determined. This resume address and indication of data remaining to be prefetched may be stored as a saved suspension state 214 for use when resuming the prefetch started at 208 for the master M2. If the data requested is not stored in the buffer 118, the memory controller 108 performs the prefetch at 244 of master M0. In one or more embodiments, while the prefetch at 244 is ongoing, a master M3 may send a data request at 206. The master M3 may have a same priority as the master M2 which results in the prefetch 206 from master M3 and master M2 continuing to wait until the prefetch started at 244 of master M0 is completed. When the prefetch of the master M2 is completed at 216 based on receiving an aborted signal 234 from the memory 120, the memory controller 108 provides the data requested to master M0 and resumes the suspended prefetch of the master M2 at 218. The resumption is based on no other prefetch of a high priority master waiting to be performed. If a high priority master has a data request, then the suspended prefetch is not resumed. If no data request by high priority master is waiting, the saved suspension state 214 of the suspended prefetch is accessed by the memory controller 108. Two or more masters with a same priority cannot suspend each other's prefetch or suspend a prefetch of a master with a higher priority. The saved suspension data 214 indicates the resume address where the prefetch is to continue in the memory 120 and amount of data left to prefetch. The prefetch started at 208 is resumed at 218 and continued so long as no data request from a high priority master is received. The memory controller 108 sends a resume request 236 to the memory 120 to resume the prefetch. When remaining data is prefetched and an aborted signal 238 is received from the memory 120, then the prefetch started at 208 is completed at 220. The memory controller 108 provides the requested data to master M2. The memory controller 108 then begins a prefetch at 222 of the master M3 in a similar manner if the data requested is not stored in the buffer 118. When the prefetch started at 222 of the master M3 is completed at 224 and the aborted signal 242 is received from the memory 120, the prefetch started at 222 is completed and the memory controller 108 returns to an idle state. The memory controller 108 also provides the data requested to master M3.

In one or more embodiments, a prefetch of data of a master 102 may be suspended and the same master 102 may send a data request to read data which is not stored in the sub-buffer associated with the master 102 or not located in the addresses of the prefetch when resumed. The prefetch which is suspended for the master 102 may be terminated and the memory controller 108 may clear the sub-buffer associated with the master 102. A new prefetch for this master 102 could be executed because the data to be obtained associated with the suspended prefetch is not needed by the master 102 anymore.

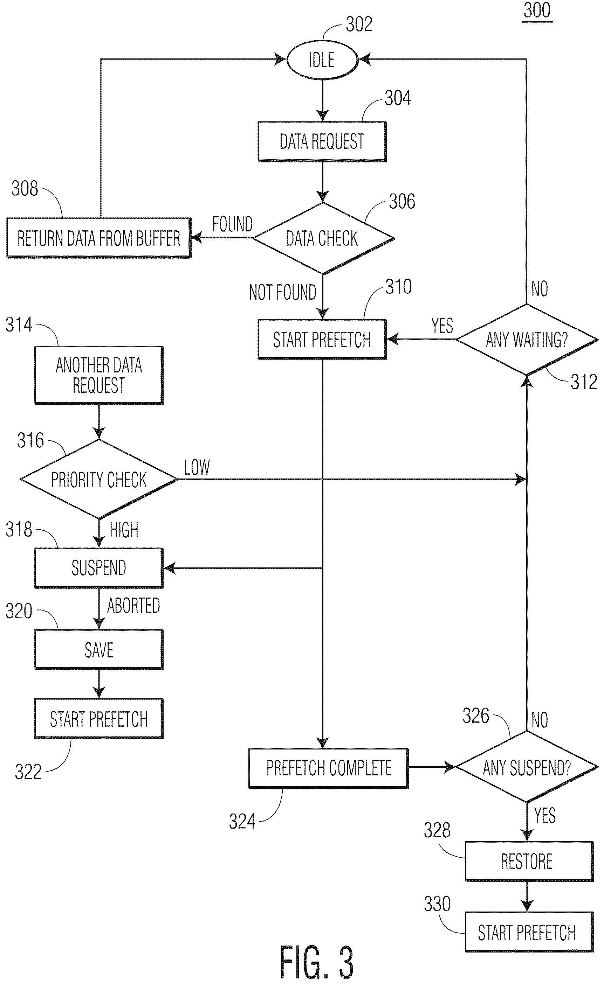

FIG. 3 is an example flowchart 300 of functions 302-330 performed by the memory control circuit 112 in accordance with one or more embodiments. The memory control circuit 112 may be in an idle state at 302. A data request may be received by the memory control circuit 112 from a master 102 at 304 via the bus interface 110. The address of the data to request and master identification are provided to the buffer manager 116 to check whether the data requested is stored in the buffer 118 at 306. If the data is stored in the buffer 118, then the data requested is provided to the master 102 at 308 and the memory control circuit 112 returns to the idle state at 302. If the data is not stored in the buffer 118, then the buffer manager 116 provides an indication to the memory control circuit 112 that the data is located in the memory 120. The memory control circuit 112 then signals the memory interface circuit 114 to start a prefetch of data at 310. Based on the prefetch, the data requested is received from the memory 120 and stored in the buffer 118 associated with the master 102 which issued the data request at 304. Further, the memory control circuit 112 provides the data requested to the master 102 when the prefetch is complete at 324. If another data request is received from another master by the memory control circuit 112 at 314 and while the prefetch started at 310 is being performed, then a determination is made at 316 whether the other master has a higher priority than the master for which the prefetch at 310 is being performed. If the priority of the master for which the prefetch of data started at 310 is being performed is lower, then the data request at 314 of the other master is not performed until the prefetch of data started at 310 is completed and the data request of the low priority master is placed on hold at 312. If the priority is higher, then the prefetch started at 310 is suspended at 318 by signaling the memory access circuit 112 to abort the prefetch started at 310. The prefetch may be suspended when one or more chunks of data are read from the memory 120 associated with the prefetch rather than suspending the prefetch based only on the determination to suspend the prefetch. Further, the reading may need to continue to read a chunk which crosses a page boundary before the prefetch is suspended but after the determination to suspend the prefetch. The memory interface circuit 112 may de-assert a chip select signal to abort the prefetch and determine as a saved suspension state at 320 a resume address of data to be prefetched after the last address where the prefetch was suspended and an amount of data left to be read from the memory 102 and to be stored in the buffer 118 to complete the prefetch of data started at 310. The memory control circuit 112 may further provide an indication to the bus interface 110 that the data request of the master is suspended and the bus interface 110 may inform the respective master. The memory control circuit 112 may then signal the memory interface circuit 114 to perform a prefetch at 322 for the data request of the master 102 with the high priority if the data requested is not stored in the buffer 118. If the prefetch of data started at 310 is completed instead of being suspended at 318, then the memory control circuit 112 provides the data requested to the master associated with the prefetch and determines whether any other prefetches are suspended at 326. If there is a prefetch that is suspended then the memory control circuit 112 signals the memory interface circuit to restore the saved suspension state of the prefetch at 328 and restart the prefetch of data 330. For example, the prefetch started at 310 may be suspended at 318 and then resumed at 328, 330. If there is no prefetch that is suspended then the memory control circuit 112 determines whether any data requests is still pending at 312. If there is a data request pending, then the memory control circuit 112 starts the data request. For example, the data request received at 314 may be pending if the priority of the master which issued this data request is low and the priority of the master which issued the data request 304 is high. Otherwise, the memory control circuit 112 returns to the idle state at 302.

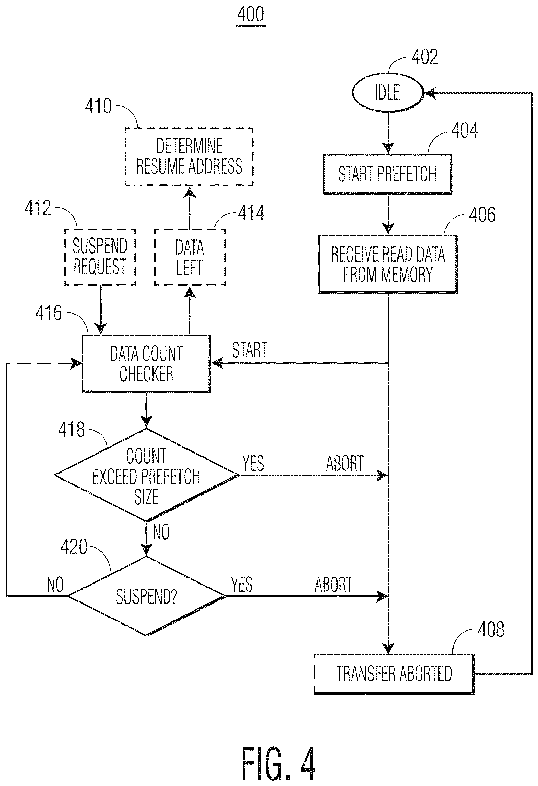

FIG. 4 is an example flowchart 400 of functions performed by the memory interface circuit 114 in accordance with one or more embodiments. If data of a data request from a master 102 is not stored in the buffer 118, then the memory control circuit 112 may perform a prefetch by sending a signal to the memory interface circuit 114 which includes the start address in the memory 120 where to start the prefetch of data and an amount of data to prefetch. The memory interface circuit 114 may start the prefetch of data at 404 based on this signal by asserting a chip select to the memory 120 and providing the start address to the memory 120 of the data to read. The memory interface circuit 114 receives the read data from the memory 120 at 406 which is then provided to the memory control circuit 112 for storage in the buffer 118. An amount of data read is counted at 416. A determination of an amount of data prefetched is determined at 418. If the amount of data prefetched exceeds an amount of data to prefetch (prefetch size), then the memory interface circuit 114 provides an abort signal to the memory 120 to indicate the prefetching is completed. The data requested is then provided to the master 102. In some embodiments, the memory control circuit 114 may cause the memory interface circuit 114 to suspend the prefetch based on a suspend request provided at 412 before the amount of data to prefetch is read. A determination is made at 420 whether the prefetch is suspended. The memory control circuit 112 may provide a suspend request to the memory interface circuit 114 at 412 to suspend the prefetch and processing associated with the suspend request is shown by a dotted box to indicate that it is performed separate or in parallel with the processing at 402-408, 416-420. If the prefetch started at 404 is not suspended, then processing returns to 416 to count the data read from memory during the prefetch. If the prefetch is suspended, then the memory interface circuit 114 may provide the abort signal to the memory 120 and the prefetch aborted at 408. In some embodiments, the prefetch of data is not aborted until a number of chunks is read even if a page boundary is crossed after a determination to suspend the prefetch but before the prefetch is suspended rather than suspending the prefetch immediately when receiving the abort signal. The memory interface circuit 114 may suspend the prefetch by providing the abort signal to the memory 120 and the prefetch aborted is at 408. In one or more embodiments, the memory interface circuit 114 may determine an amount of data left for the prefetch of data at 414 and determine a resume address in the memory 120 where the prefetch of data is to resume at 410 which is stored as a saved suspension state. These operations are also shown by dotted boxes to illustrate it is associated with the suspension of the prefetch. The saved suspension state may be used by the memory interface circuit 114 to resume the prefetch when the memory control circuit 112 provides a resume request to the memory interface circuit 114. Otherwise, processing returns to 416 if the prefetch is not to be suspended.

A priority based prefetch by a memory controller is disclosed. A prefetch of data of a low priority master is suspended when a data request associated with a high priority master indicated by a master identification is to be performed. The suspension includes storing a saved state of the prefetch, performing the prefetch of data of the high priority master, and resuming the prefetch of data of the low priority master when the prefetch of data of the high priority master is completed.

Advantageously, the disclosed prefetch is performed by the memory controller 108 without intervention by the master 102, the memory 120, or by software. The prefetch allows for a data access by a high priority master to be performed with reduced latency and access by equal priority masters being provided equal access to the memory 120. The access to the memory 120 by the master 102 is controlled by the memory controller 108 rather than by software at higher levels or by the master 102. The memory controller 108 suspends the prefetch of data after one or more chunks of data is read from the memory 120 and the read chunk may cross a page boundary after the determination to suspend but before the prefetch is actually suspended if the chunk includes tag data. Based on the last address where the prefetch of data was stopped, the memory controller 108 determines a resume address where the prefetch of data is to be resumed in the memory 120 and an amount of data left to prefetch which is stored as a saved suspension state independent of intervention by the master 102. The prefetch and resume address and amount of data to prefetch may account for a size of the tag data stored in the memory 120 associated with encryption or error correction coding of the data which is to be also prefetched in one or more embodiments. Further, an indication of the suspension of a data request is provided back to the master 102.

In one or more embodiments, a method for priority based prefetch by a memory controller is disclosed. The method includes receiving, by the memory controller, a data request from a master; determining, by the memory control, that the master is a high priority master based on a master identification of the master in the data request; determining, by the memory controller, that the prefetch of data of a low priority master is pending when the data request is received; suspending, by the memory controller, the prefetch of data of the low priority master based on the determination; performing, by the memory controller, a prefetch of data of the high priority master from memory based on the suspension; and resuming, by the memory controller, the prefetch of data of the low priority master after the prefetch of data of the high priority master is completed. In one or more embodiments, suspending, by the memory controller, the prefetch of data of the low priority master includes storing a resume address of data left to prefetch when the prefetch of data of the low priority master is resumed and an amount of data left to prefetch. In one or more embodiments, the data to prefetch includes one or more tag data to decrypt or to perform error correction on the data to prefetch, the prefetch being suspended after a chunk with data and tag data are read from the memory, the read crossing a page boundary of the memory after a determination to suspend the prefetch of data of the low priority master. In one or more embodiments, the data to be prefetched is stored in the memory as encrypted data. In one or more embodiments, the data to be prefetched stored in the memory includes an error correction code (ECC). In one or more embodiments, the method further includes receiving a data request from another high priority master while the prefetch of data of the high priority master is pending and not suspending the prefetch of data of the high priority master. In one or more embodiments, the method further includes determining whether the data requested has corresponding tag data; based on the data requested having corresponding tag data, suspending the prefetch of the low priority master after a read of a chunk crosses a page boundary of the memory, the read crossing the page boundary of the memory after a determination to suspend the prefetch; and based on the data requested not having corresponding tag data, suspending the prefetch of the low priority master without the read of the chunk crossing the page boundary of the memory after the determination to suspend the prefetch. In one or more embodiments, the data request from the low priority master is a first data request, the method further includes receiving a second data request from the low priority master, wherein a buffer of the memory controller or data left to be fetched after the suspended prefetch is resumed does not include requested data of the second data request; and terminating resumption of the prefetch of data of the low priority master. In one or more embodiments, the method further includes receiving a data request from another low priority master before the prefetch of data of the high priority master and not suspending the prefetch of data of the low priority master.

In one or more embodiments, a memory controller in a system on chip (SoC) for priority based prefetch is disclosed. The memory controller is arranged to receive a data request from a master; determine that the master is a high priority master based on a master identification of the master in the data request; determine that a prefetch of data of a low priority master is pending when the data request is received; suspend the prefetch of data of the low priority master based on the determination; perform the prefetch of data of the high priority master from memory coupled to the SoC based on the suspension; and resume the prefetch of data of the low priority master after the prefetch of data of the high priority master is completed. In one or more embodiments, the memory controller arranged to suspend the prefetch of data of the low priority master includes the memory controller arranged to store a resume address of data left to be fetched when the prefetch of data of the low priority master is resumed and an amount of data left to prefetch. In one or more embodiments, the data to prefetch includes one or more tag data to decrypt or perform error correction on the data to prefetch, the prefetch being suspended after a chunk with data and tag data are read from the memory, the read crossing a page boundary of the memory after a determination to suspend the prefetch of data of the low priority master. In one or more embodiments, the memory controller is further arranged to receive a data request from another high priority master while the prefetch of data of the high priority master is pending and not suspend the prefetch of data of the high priority master. In one or more embodiments, the memory controller is further arranged determine whether the data requested has corresponding tag data; based on the data requested having corresponding tag data, suspend the prefetch of the low priority master after a read of a chunk crosses a page boundary of the memory, the read crossing the page boundary of the memory after a determination to suspend the prefetch; and based on the data requested not having corresponding tag data, suspend the prefetch of the low priority master without the read of the chunk crossing the page boundary of the memory after the determination to suspend the prefetch. In one or more embodiments, the data request of the low priority master is a first data request, the memory controller further arranged to receive a second data request from the low priority master, wherein a buffer of the memory controller or data left to be fetched after the suspended prefetch is resumed does not include the requested data of the second data request; and terminate resumption of the prefetch of data of the low priority master. In one or more embodiments, the memory controller is further arranged to receive a data request from another high priority master while the prefetch of data of the high priority master is pending and not suspend the prefetch of data of the high priority master.

In one or more embodiments, system for priority based prefetch of data is disclosed. The system includes a high priority master; a low priority master; a memory controller coupled to the masters; a memory external to the masters and memory controller; the memory controller arranged to receive a data request from a master; determine that the master is a high priority master based on a master identification of the master in the data request; determine that a prefetch of data of the low priority master is pending when the data request is received; suspend the prefetch of data of the low priority master based on the determination; perform the prefetch of data of the high priority master from the memory based on the suspension; and resume the prefetch of data of the low priority master after the prefetch of data of the high priority master is completed. In one or more embodiments, the memory stores encrypted data which is decrypted for storage in a buffer of the memory controller or an error correction code (ECC) associated with the read data which is used to correct the data read from the memory and then stored in the buffer. In one or more embodiments, the data to prefetch includes one or more tag data to decrypt or to perform error correction on the data to prefetch, the prefetch being suspended after a chunk with data and tag data is read, the read crossing a page boundary of the memory after a determination to suspend the prefetch of data of the low priority master. In one or more embodiments, the memory controller is further arranged to determine whether the data requested has corresponding tag data; based on the data requested having corresponding tag data, suspend the prefetch of the low priority master after a read of a chunk crosses a page boundary of the memory, the read crossing the page boundary of the memory after a determination to suspend the prefetch; and based on the data requested not having corresponding tag data, suspend the prefetch of the low priority master without the read of the chunk crossing the page boundary of the memory after the determination to suspend the prefetch.

A few implementations have been described in detail above, and various modifications are possible. The disclosed subject matter, including the operations described in this specification, can be implemented in electronic circuit, computer hardware, firmware, software, or in combinations of them, such as the structural means disclosed in this specification and structural equivalents thereof: including potentially a program operable to cause one or more data processing apparatus such as a computer to perform the operations described (such as a program encoded in a non-transitory computer-readable medium, which can be a memory device, a storage device, a machine-readable storage substrate, or other physical, machine readable medium, or a combination of one or more of them).

While this specification contains many specifics, these should not be construed as limitations on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations.

Use of the phrase "at least one of" preceding a list with the conjunction "and" should not be treated as an exclusive list and should not be construed as a list of categories with one item from each category, unless specifically stated otherwise. A clause that recites "at least one of A, B, and C" can be infringed with only one of the listed items, multiple of the listed items, and one or more of the items in the list and another item not listed Other implementations fall within the scope of the following claims.

## Claims

1. A method for priority based prefetch by a memory controller, the method comprising:
receiving, by the memory controller, a data request from a master;
determining, by the memory controller, that the master is a high priority master based on a master identification of the master in the data request;
determining, by the memory controller, that the prefetch of data of a low priority master is pending when the data request is received;
suspending, by the memory controller, the prefetch of data of the low priority master based on the determination;
performing, by the memory controller, a prefetch of data of the high priority master from memory based on the suspension; and
resuming, by the memory controller, the prefetch of data of the low priority master after the prefetch of data of the high priority master is completed.

2. The method of claim 1, wherein suspending, by the memory controller, the prefetch of data of the low priority master comprises storing a resume address of data left to prefetch when the prefetch of data of the low priority master is resumed and an amount of data left to prefetch.

3. The method of claim 1 or 2, wherein the data to prefetch includes one or more tag data to decrypt or to perform error correction on the data to prefetch, the prefetch being suspended after a chunk with data and tag data are read from the memory, the read crossing a page boundary of the memory after a determination to suspend the prefetch of data of the low priority master.

4. The method of any preceding claim, wherein the data to be prefetched is stored in the memory as encrypted data.

5. The method of any preceding claim, wherein the data to be prefetched stored in the memory includes an error correction code (ECC).

6. The method of any preceding claim, further comprising receiving a data request from another high priority master while the prefetch of data of the high priority master is pending and not suspending the prefetch of data of the high priority master.

7. The method of any preceding claim, further comprising determining whether the data requested has corresponding tag data; based on the data requested having corresponding tag data, suspending the prefetch of the low priority master after a read of a chunk crosses a page boundary of the memory, the read crossing the page boundary of the memory after a determination to suspend the prefetch; and based on the data requested not having corresponding tag data, suspending the prefetch of the low priority master without the read of the chunk crossing the page boundary of the memory after the determination to suspend the prefetch.

8. The method of any preceding claim, wherein the data request from the low priority master is a first data request, the method further comprises receiving a second data request from the low priority master, wherein a buffer of the memory controller or data left to be fetched after the suspended prefetch is resumed does not include requested data of the second data request; and terminating resumption of the prefetch of data of the low priority master.

9. The method of any preceding claim, further comprising receiving a data request from another low priority master before the prefetch of data of the high priority master and not suspending the prefetch of data of the low priority master.

10. A memory controller in a system on chip (SoC) for priority based prefetch, the memory controller arranged to receive a data request from a master; determine that the master is a high priority master based on a master identification of the master in the data request; determine that a prefetch of data of a low priority master is pending when the data request is received; suspend the prefetch of data of the low priority master based on the determination; perform the prefetch of data of the high priority master from memory coupled to the SoC based on the suspension; and resume the prefetch of data of the low priority master after the prefetch of data of the high priority master is completed.

11. The memory controller of claim 10, wherein the memory controller arranged to suspend the prefetch of data of the low priority master comprises the memory controller arranged to store a resume address of data left to be fetched when the prefetch of data of the low priority master is resumed and an amount of data left to prefetch.

12. The memory controller of claim 10 or 11 , wherein the data to prefetch includes one or more tag data to decrypt or perform error correction on the data to prefetch, the prefetch being suspended after a chunk with data and tag data are read from the memory, the read crossing a page boundary of the memory after a determination to suspend the prefetch of data of the low priority master.

13. The memory controller of any of claims 10 to 12, wherein the memory controller is further arranged to receive a data request from another high priority master while the prefetch of data of the high priority master is pending and not suspend the prefetch of data of the high priority master.

14. The memory controller of any of claims 10 to 13, wherein the memory controller is further arranged determine whether the data requested has corresponding tag data; based on the data requested having corresponding tag data, suspend the prefetch of the low priority master after a read of a chunk crosses a page boundary of the memory, the read crossing the page boundary of the memory after a determination to suspend the prefetch; and based on the data requested not having corresponding tag data, suspend the prefetch of the low priority master without the read of the chunk crossing the page boundary of the memory after the determination to suspend the prefetch.

15. The memory controller of any of claims 10 to 14, wherein the data request of the low priority master is a first data request, the memory controller further arranged to receive a second data request from the low priority master, wherein a buffer of the memory controller or data left to be fetched after the suspended prefetch is resumed does not include the requested data of the second data request; and terminate resumption of the prefetch of data of the low priority master.
